# EUROPEAN PATENT APPLICATION

(11) **EP 2 096 568 A1**
(43) Date of publication of application: **02.09.2009**
(21) Application number: 08003523.1
(22) Date of filing: 27.02.2008
(51) Int. Cl.: G06F 21/00, G06F 9/445

(54) **Mobile data handling device**

(71) Applicant: Koninklijke KPN N.V., 2516 CK The Hague (NL); Nederlandse Centrale Organisatie Voor Toegepast Natuurwetenschappelijk Onderzoek TNO, 2628 VK Delft (NL)
(72) Inventor: Joosten, Hendricus, 9861 TJ Groote Gast (NL); Hut, Hiddo, 2612 GB Delft (NL); Broekhuysen, Jeroen, 2612 GB Delft (NL)
(74) Representative: Wuyts, Koenraad Maria

(57) **Abstract**

A mobile data handling device comprising a memory comprising software; a communications module for communication via a data network. The device further comprises a control means for connecting to a data processor (114) in a further data handling device (112) external to the mobile data handling device (100) via a connection interface (110); controlling external execution of the software (104) by the data processor (114); controlling the communications module (106) to at least receive or send data via a data network under the control of the software (104).

## Description

### FIELD OF THE INVENTION

The invention relates to a mobile data handling device.

In particular, the invention relates to a mobile data handling device comprising a memory; a communications module for communication via an external data network; and a connection interface.

The invention also relates to a mobile data handling device comprising a security processor.
The invention also relates to computer program product.
The invention also relates to a method for providing software.
The invention also relates to a mobile phone.

### BACKGROUND OF THE INVENTION

Using modem communication networks, e.g., data networks, such as the Internet, a user can access documents, read his/her email, download a presentation and use services from all over the world. Even while travelling this can be done easily from, for example, an Internet cafe. There is however a problem if this access needs to be done securely.

When a user cannot vouch for software running on a computer, or for the source the software comes from, the computer is from his/her perspective an untrusted computer. Untrusted computers include those in an Internet cafe or computers under the control of strangers. Even a computer under the control of friends or colleagues can, under circumstances, be regarded as an untrusted computer. In some circumstances even one's own computer may be regarded as untrusted. In some cases a computer can be trusted even though the source of its software is unknown if there is a particular reason for the trust. For example, a user may, generally speaking, trust the server of his/her Internet Service Provider (ISP), based on the user's contractual relation with the ISP and the comparatively greater security awareness of the ISP. Similarly, the user may trust a mobile phone operator.

From a security perspective, working with an untrusted computer is dangerous. For example, the untrusted computer may be infected with a virus, a Trojan or any other type of malicious software, also called malware. The user's credit card numbers may be intercepted and forwarded to illicit sites. The same holds for his/her credentials, such as a user name and a password. Also, using a banking application from an untrusted computer is for security reasons ill-advised. To make matters worse, this malware may be, inadvertently, downloaded to any mobile device the user has connected to the untrusted computer.

The user can achieve secure communication by using only trusted data handling devices, such as a computer, mobile phone, or pda, running trusted software, and ideally using trusted networking. For example, using a desktop computer running trusted software, a secure environment can be created. While travelling, the same can be achieved by using a trusted laptop computer that is capable of communicating to a data network. These solutions both have the drawback that they are less suitable for travelling as they require the user to take with him/her large and expensive pieces of hardware

Some of these problems can be partially solved using a USB stick comprising a memory, wherein the memory comprises bootable software obtained from a trusted source. By connecting the USB stick to the computer and booting or rebooting the computer, the computer executes software from the USB stick. In particular, if the software comprises an operating system, the user could only use software that comes from a trusted source.

Unfortunately any network traffic, such as Internet traffic, that is generated while using a computer, even after booting from a USB stick with bootable software, is routed via the communications module of other computers, or in general via any networking node, some of which may be untrusted. Some of these computers may be under the control of a hacker and/or may also contain malware. Using the USB stick with bootable software the user cannot directly contact a trusted computer; he/she cannot enforce how his/her data will be routed. For example, in the situation of an Internet café, even if the computer currently in use is booted from a USB stick, the data traffic will run through a central routing computer not under the control of the user. As a result, the user still has no assurance that no one eavesdrops or modifies his/her data traffic. Moreover, the connection the user established with a data network may be hijacked by malware and used for its own nefarious purposes.

It is a problem of the prior art that the routing of network traffic cannot be controlled while using an untrusted computer.

### SUMMARY OF THE INVENTION

It is an object of the invention to control what software runs on an untrusted computer, as well as the data traffic generated by it.

This object is achieved by the mobile data handling device according to the invention, as defined in claim 1.

Since the mobile data handling device comprises a communications module, the mobile data handling device can connect to an external data network without depending on any network communication capability of the further data handling device. The data network extends externally to the mobile data handling device. An external network includes the Internet and other public data networks. An external network also includes an intranet, and other private computer networks.

This has a first advantage that the user can exert control over the routing of his/her data. This avoids computationally intensive security solutions, such as encrypted communication paths. Moreover, such security solutions require that both the service endpoints, i.e. a client and a server need to support the security solution. Here the service endpoints are, e.g., the mobile data handling device and, e.g., an Internet Service Provider. For additional security the invention may be combined with any of these security solutions and with other conventional security solutions. For example, the software may be configured to support such a security solution, e.g., encrypted communication.

A second advantage of the mobile data handling device according to the invention is that the further data handling device can be used within the context of network communications even if the further data handling device itself does not comprise a communications module.

Also, since the data handling device is mobile it can be taken along on an itinerary. This has the advantage that the mobile data handling device is always available as the user's trusted personal device.

By using a mobile data handling device according to the invention a much smaller and cheaper solution to secure computing is achieved as compared to the further data handling device, or as compared to, for example, using a laptop. Note that, a laptop that may, for some other reason, be available can be used as a further data handling device.

Preferably the software is of the read-only type. This has the advantage that modifications to the read-only software cannot be made, including possibly malicious modifications.

A preferred embodiment of the mobile data handling device according to the invention is characterized by the measure of claim 2.

Access to the software can be controlled by routing all read commands and/or write commands from the data processor through the security processor. The security processor could, e.g., block all write commands. The security processor could, e.g., block all write commands and/or read commands to designated areas of the memory comprising the software. Alternatively the security processor can control access to the memory by reading, on request, the required information from the memory itself and forwarding the information to the data processor. In the latter scenario, no direct access from the data processor to the memory is needed.

An example of a security processor is a Subscriber Identity Module (SIM), for example a SIM comprised in a mobile phone, such as comprised in a SIM-card. Another example of a security processor is a processor that is dedicated to security related operations.

A preferred embodiment of the mobile data handling device according to the invention is characterized by the measure of claim 3.

As the mobile data handling device is equipped with a communications module and a security processor, it becomes possible for the device to independently receive updates to the software via the data network. The updates can be pushed to the mobile data handling device or can be pulled, i.e. requested in advance, by the mobile data handling device. This has the advantage that each time a user connects the device to a further data handling device and executes the software he/she uses the latest version. This feature can be used to fix bugs, fix security problems, i.e. receive security updates, and receive new features. In this way the security of the device and the software is increased.

As is well known to a person skilled in the art, in most modem software-based systems frequent security related problems, such as some types of bugs, are found. Depending on the use, such as the required level of security and/or trust, or how contemporary the software is expected to be, the need for frequent updates, such as security fixes, can be even higher. In order to provide for secure services, updates are a requisite. The feature of claim 3 provides an alternative to a frequent docking of the mobile data handling device at a trusted docking station, in order to obtain updates. In the invention, a trusted docking station is not needed, making a system comprising a mobile data handling device according to the invention both more economic and more convenient as a result of receiving the updates via, e.g., over-the-air-programming (OTA).

Since the software can comprise data, this feature can also be used to receive updates to data used by the mobile phone. For example, while running software from a bank, the mobile data handling device may display or act upon, transaction codes received from a bank, possibly in real-time.

A practical embodiment of the mobile data handling device according to the invention is characterized by the measure of claim 4.

To verify that the software has not been modified a checksum value can be stored in a memory comprised in the mobile data handling device. The security processor can compute this checksum over the software, and determine if the computed checksum is equal to the stored checksum. It may be preferable to compute the checksum over only part of the software, for example, to omit a part of the software which is updated regularly, or is under the control of the user, or is under the control of the data processor. Further data, not necessarily comprised in the software, could be included, for example, a user profile or security settings, can be included in the checksum calculations in order to be checked for modification.

A practical embodiment of the mobile data handling device according to the invention is characterized by the measure of claim 5.

Before granting access to the software the security processor can check a password supplied by the user or a password supplied by a password token. This has the advantage that a link is established between the device and the user. Alternatively the user can provide his/her password to the further data handling device, which, in turn, can provide it to the mobile data handling device. An illegal owner of the device, for example, somebody who has found or stolen the device and who doesn't know the password, cannot get access to the device. This further increases the security of the system.

A password is, for example, a string of: numbers, letters, punctuation marks, or any other symbols. A password can be represented in ASCII encoding, although this is not necessary. A password could also comprise a representation of one or more biometrical features of the user. For example, a password could be a representation of the user's fingerprint, his/her iris or his/her auditory canal.

A preferred embodiment of the mobile data handling device according to the invention is characterized by the measure of claim 6.

A better protection against malware running on, or through, the further data handling device is obtained by booting the further data handling device from the software in the memory. In this way it is avoided that software on the further data handling device is run before the trusted software in the memory is run.

Many ways of booting another device from a mobile data handling device are known in the art. For example, a first way is to provide a software application on the mobile data handling device that emulates a USB hard disk for which the contents resides in a memory. The memory could be comprised in, or coupled to, a security processor.

A second way, is to emulate a hard disk, in a security processor, and provide a software application in the mobile data handling device that connects this emulated hard disk to the connection interface.

A third way, is to provide a software application in the mobile data handling device and/or a security processor that would obtain the boot-image, i.e. boot software, over the air by downloading the boot-image wirelessly from a remote source, so that persistent local storage is not required.

A modem PC BIOS supports booting from various devices; e.g., a local hard disk drive or a partition on a hard disk, a floppy, an optical disc drive, an SCSI device, a Zip drive, a network interface card using PXE and a USB device, such as USB-FDD, USB-ZIP, USB-CDROM, USB-HDD, USB flash drive. Any of these interfaces provide opportunity for booting from a remote device.

The booted software could run a dedicated application, such as an email program to send or receive email, or a banking application. The software could also run a checking program, such as a virus scanner or an anti-spyware program, to check the further data handling device and local storage like a hard disk thereon. After the checking program has approved of the further data handling device and its storage the system can tell the user to disconnect the mobile data handling device in order to initialize a reboot of the further data handling device and to start a local operating system present on a storage media comprised in the further data handling device. Possibly, the rebooting will be initiated autonomously, without user intervention, by the mobile data handling device.

A practical embodiment of the mobile data handling device according to the invention is characterized by the measure of claim 7.

If the software comprises an operating system, suitable for running on the further data handling device, a higher level of computer security can be achieved. It can then be arranged that all communication caused by the data processor, is routed through the communications module of the mobile data handling device instead of through a communications module comprised in the further data handling device. As a result, it can be guaranteed that sensitive data, such as credit card numbers, only runs through trusted channels. Thus the security is further increased.

If a communication channel, such as wireless communication, is not trusted, even though it belongs to a mobile phone operator, the level of security can be further increased by securing the communication channel. For example, the communication in the channel between the mobile data handling device and a server, can be encrypted to securely transfer information.

The invention could also be used by, for example, a bank to distribute to its clients a trusted operating system that is specifically targeted at home internet banking.

The mobile data handling device can also be used to execute a trusted operating system on a trusted laptop. In this way, hardware key loggers can be circumvented. For example, a user may have a mobile data handling device according to the invention and a laptop. The laptop may contain untrusted software, but the hardware is otherwise trusted. Using the mobile data handling device to boot the laptop, and/or to run software on the laptop, the user can temporarily switch to a high-security environment. In this way he/she can avoid using a desktop, which may contain tampered hardware, such as a key logger, altogether.

Operating system software manages the access to, and sharing of, the resources of a computer and includes any of the series of Windows operating systems, Apple operating system and UNIX operating system, including Linux. Note that there is no need that the operating system provided by the mobile data handling device is the same, or even of the same type as the operating system that is present on the further data handling device. The only requirement is that the operating system provided by the mobile data handling device is suitable for the type of hardware used in the further data handling device.

A practical embodiment of the mobile data handling device according to the invention is characterized by the measure of claim 8.

A convenient way to connect a mobile data handling device to a further data handling device is through the Universal Serial Bus (USB) protocol.

A practical embodiment of the mobile data handling device according to the invention is characterized by the measure of claim 9.

A convenient way to connect a mobile data handling device to a further data handling device is through using a wireless protocol, such as a Wi-Fi protocol or using Near Field Communication (NFC), or Wireless USB.

A practical embodiment of the mobile data handling device according to the invention is characterized by the measure of claim 10.

A convenient way to allow the further data handling device to boot from the mobile device is to emulate a drive. Alternatively, the emulated drive may also be used for convenient data storage. An emulated drive includes an emulated disk drive, hard disk drive, DVD drive or CD-ROM drive.

A practical embodiment of the mobile data handling device according to the invention is characterized by the measure of claim 11.

A convenient way for the communications module to connect to a data network is to use a wireless communication, such as: Wi-Fi, General Packet Radio Service (GPRS) or Universal Mobile Telecommunications System (UMTS). This has the advantage that the user does not need an additional computer for providing the connectivity.

A practical embodiment of the mobile data handling device according to the invention is characterized by the measure of claim 12.

A common form of an attack on a networked data handling device is through one or more maliciously crafted network packets. These may cause malfunction, or worse, cause the system to perform damaging acts.

The attack can target the software, in particular an operating system, or an application running in conjunction with an operating system. Any software that actively listens to inbound network traffic is vulnerable to this type of attack.

A maliciously crafted network packet could also be received in response to a user, using a browser, browsing a malicious website; or when the user, uses an e-mail client to receive an email. Maliciously crafted network packets can be received even if the user runs a trusted operating system.

One way to mitigate the risk of attacks that use malicious data packets is to filter out such data packets, for example, using a firewall. A result of filtering out a network packet when it is received is that the data packet will not appear on the connective coupling, and will not be received by the processor. When the processor does not receive the maliciously crafted network packet it cannot be affected by it.

The computer program product according to the invention is characterized by claim 13.

A computer program product may include a suitable storage unit, such as a floppy disk, a USB stick and a memory, such as a memory chip. The scope of claim 13 also extends to a server comprising the computer code. The computer code can be fabricated using various well known high-level programming languages, such as, C, C++ or Pascal. The computer code can alternatively be fabricated using low-level programming languages, such as assembly, machine codes or microcode.

The method for providing software is characterized by claim 14.

It is convenient to have a providing system provide the software. For example, a server provides the software by making the software available for download, via a data network, such as the Internet. The providing method can be executed on a providing system comprising a processing device for enabling such providing.

The mobile phone is characterized by claim 15.

By comprising the mobile data handling device in a mobile phone, the communications module can be re-used for the mobile phone itself. This reduces the cost to create such a mobile phone annex mobile data handling device.

It is to be noticed that US patent application 20040059907 discloses a method and apparatus for booting a computer using a USB-compliant token. Unlike the invention the token does not comprise a communications module. Moreover the token neither comprises a software that is executed by the computer, nor a boot-image.

It is to be noticed that US patent application 20060282658 discloses a method and system for booting a device, in particular a mobile phone. Unlike the invention the method does not provide for executing software by a further device. In particular booting a further device is not supported. Unlike the invention, using a communication module is not supported.

### BRIEF DESCRIPTION OF THE DRAWINGS

The invention is explained in further detail, by way of example and with reference to the accompanying drawing, wherein:
Fig.1 is a block diagram illustrating a first embodiment of the mobile data handling device according to the invention, while connected to a further data handling device.
Fig.2 is a block diagram illustrating a second embodiment of the mobile data handling device according to the invention.
Fig.3 is a block diagram illustrating a third embodiment of the mobile data handling device according to the invention.
Fig.4 is a block diagram illustrating a fourth embodiment of the mobile data handling device according to the invention.

Throughout the Figures, similar or corresponding features are indicated by same reference numerals.

### List of Reference Numerals:

- 100: a mobile data handling device
- 102: a memory
- 104: a software
- 106: a communications module
- 108: a communications interface
- 110: a connection interface
- 112: a further data handling device
- 114: a data processor
- 116: a connective coupling
- 200: a security processor
- 300: a checksum memory
- 302: a stored checksum
- 400: a password memory
- 402: a representation of a first password

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

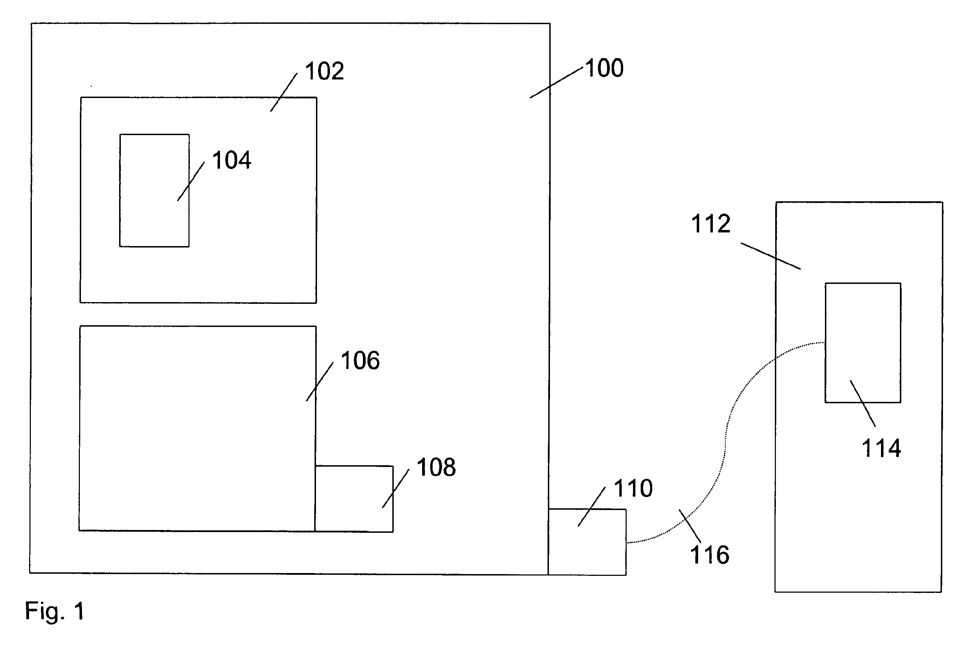

Figure 1 illustrates a first embodiment of the mobile data handling device according to the invention, while connected to a further data handling device (112). The mobile data handling device (100) comprises a memory (102) comprising software (104); a communications module (106) comprising a communications interface (108); and a connection interface (110).

Also shown in figure 1 is a further data handling device (112) comprising a data processor (114). The data processor (114) is connected through a connective coupling (116) to the mobile data handling device (100) via the connection interface (110). The connective coupling (116) can comprise a wired interface (such as USB or Ethernet) or a wireless interface (such as WiFi or Wireless USB or Bluetooth). The connective coupling (116) is easily detachable. The connection interface (110) is compatible with the type of connective coupling (116) used.

The data processor (114) has access, through the connective coupling (116), to the memory (102) to execute the software (104). The software (104) causes the communications module (106) to send or receive data to or from an external data network (not shown) through the communications interface (108).

The mobile data handling device (100) is running it's own operating system, which is different from the software comprised in the memory. One way to allow the further data handling device (112) to boot from the mobile data handling device (100) is to emulate bootable USB storage, which implements the interaction between both devices (100) and (112) in a standardized fashion.

One way to make a mobile data handling device (100) suitable for booting from it, is to arrange the mobile data handling device (100) to be able to engage in a USB protocol suitable for booting, and for the mobile data handling device (100) to be able to send a boot-image to the further data handling device (112) over a USB connection (116).

In this way, a user who uses this setup, knows the source of the software (104) that he/she is running. Moreover he/she controls the communication. If the memory (102) is a read-only memory, the user moreover knows that the software (104) cannot be modified, in particular the memory (102) can then not be modified by any malware running on the further data handling device (112).

The memory (102) can be made from regular RAM or ROM memory, such a DRAM, SRAM or SDRAM, flash memory, magnetic storage, such as a hard disk, or optical storage, or any other kind of suitable storage. The mobile data handling device (100) and the memory form a bootable medium from which the further data handling device (112) can obtain the software, or boot an operating system. The memory (102) can be comprised in a mobile phone's SIM card.

The software (104) can be fabricated using various well known high-level programming languages, such as, C, C++ or Pascal. The software (104) can alternatively be fabricated using low-level programming languages, such as assembly, machine codes or microcode.

The communications module (106) can be made using dedicated hardware, such as electronic circuits that are configured to perform a communication protocol, such as GPRS, UMTS, Ethernet, or the communications module (106) can be made from generic hardware controlled using software, or the communications module (106) may comprise a combination of dedicated hardware, generic hardware and software to implement a communication protocol.

The communications interface (108) can be a wireless interface; or interface 108 can be a wired interface, such as an Ethernet interface. In case of a wireless interface the communications interface (108) comprises an antenna.

The further data handling device (112) can be a desktop computer, or a laptop, or a gaming machine, or any other data handling device that can run, or boot from, software present external to the further data handling device (112). The data processor (114) can be any CPU, including a Pentium or an 8051.

Executing software (104) comprised in the mobile data handling device (100) on the further data handling device (112), has the advantage that, if the further data handling device (112) is untrusted, the software (104) comes from a (more) trusted source than the software on the further data handling device (112).

Executing software (104) on the mobile data handling device (100) also has the advantage that applications can be executed that may not be present on the further data handling device (112).

Using a communications module (106) comprised in a mobile data handling device (100) has the advantage that the user can vouch for the routing of the data traffic. For example, the user may trust the network nodes (such as computers and servers) from his/her ISP or mobile phone operator but not the network nodes inside an Internet Cafe.

Using the further data handling device (112) for running the software (104) on the mobile data handling device (100) instead of running the software (104) on the mobile data handling device (100) itself has the advantage that use can be made of the resources of the further data handling device (112), such as: a larger screen, more memory, a more powerful processor. This allows the mobile data handling device (100) to be smaller, lighter and cheaper compared to the further data handling device (112). Even though the mobile data handling device (100) has more limited resources, use can be made of a more powerful computer, without the need to relinquish control. Since the software (104) and communication are controlled, the security risks of using an untrusted computer are mitigated, while still taking advantage of the resources of the further data handling device (112).

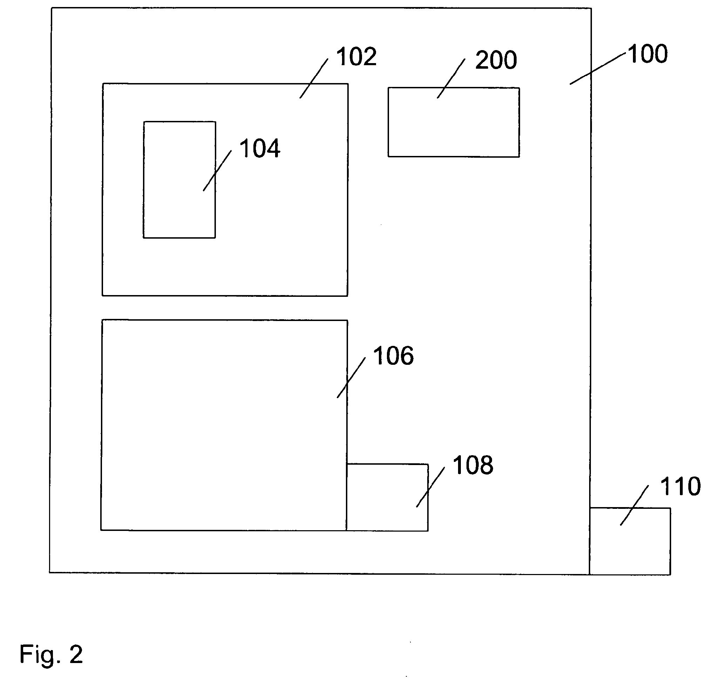

Figure 2 illustrates a second embodiment of the mobile data handling device according to the invention. The mobile data handling device (100) comprises a memory (102) comprising software (104); a communications module (106) comprising a communications interface (108); a connection interface (110); and a security processor (200).

The data processor (114) can only execute the software (104) through the control of the security processor (200). When the data processor (114) wants to read a part of the memory (102), the data processor (114) can send a request to the security processor (200). When the security processor (200) grants this request, the security processor (200) can forward the requested information to the data processor (114) or allow the information to be read by the data processor (114).

The security processor (200) could comprise, or employ, a memory management unit (mmu) (not shown) for controlling which parts of the memory (102) are allowed for reading and/or writing and/or execution from by the data processor (114).

Before allowing the data processor (114) to access to the memory (102), e.g. by granting access, the security processor (200) can cause a suitable message to be displayed, for example on a screen comprised in the mobile data handling device (100). The message then asks for confirmation from the user that the further data handing device (112) is allowed access to the memory (102). The user can respond, to affirm or deny the access, to said message through an input means comprised in the mobile data handling device (100), for example, by typing a key, or touching the screen, or by ignoring it and thereby generating a timeout.

Before allowing the data processor (114) to boot from the software (104), the security processor (200) can cause a suitable message to be displayed, for example on a screen comprised in the mobile data handling device (100). The message then asks for confirmation from the user that the further data handing device (112) is allowed access to the memory (102). The user can respond to said message via the input means, for example, through the means described above. The message can also offer the user a choice of a plurality of software programs (boot-images) from which the data processor (114) can boot. The user can make his/her choice known by interacting with the mobile data handling device (100) through the input means, for example, through the means described above.

A security processor (200) can be a CPU, such as a Pentium or an 8051, or any other suitable type of processor. Also a SIM card can be used. In particular, in combination with a mobile phone, using a SIM card is convenient.

The memory (102) could be comprised in general memory (not shown) of the mobile data handling device (100), or could be memory that is coupled, dedicatedly or not, to the security processor (200).

The advantage of a security processor (200) is that more control over the software (104) is possible, and that the integrity of the software (104) can be maintained. The risk that the software is modified without authorization, thereby destroying its integrity, is mitigated.

Many combinations of these features will be apparent to a person skilled in the art. A particular advantageous embodiment is the following: a mobile phone comprising the mobile data handling device (100) comprising a SIM. The SIM is used as security processor (200) and comprises a trusted operating system and additional software. The mobile phone emulates bootable USB storage from which a computer, i.e. a further data handling device (112) can boot the trusted OS. The mobile phone is running its own operating system different from the trusted operating system and different from the additional software.

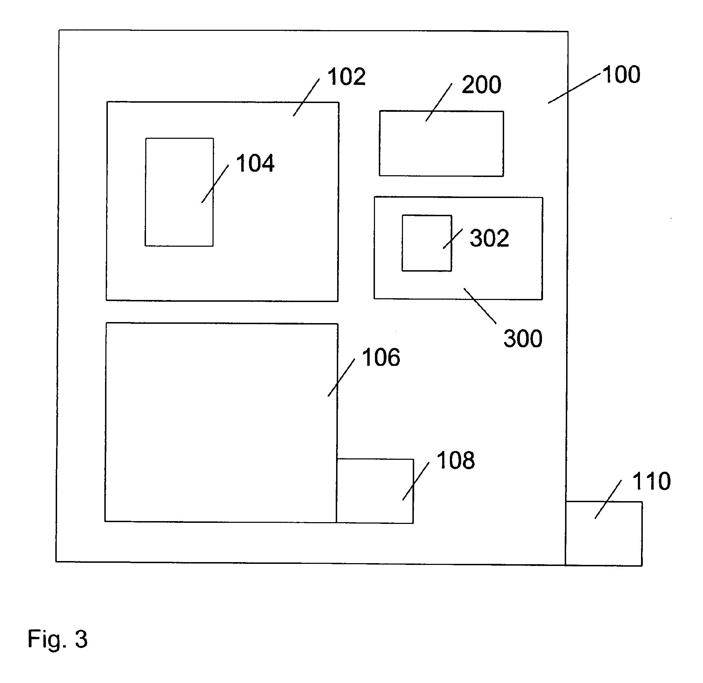

Figure 3 illustrates a third embodiment of the mobile data handling device according to the invention. The mobile data handling device (100) comprises a memory (102) comprising software (104); a communications module (106) comprising a communications interface (108); a connection interface (110); a security processor (200); and a checksum memory (300) comprising a stored checksum (302).

The security processor (200) can verify the integrity of the software (104) by first computing the checksum and then comparing the computed checksum with the stored checksum (302). In case the two are equal the software (104) is unmodified. The checksum can be computed using any checksum algorithm, such as crc-16, crc-32, sha-1 and sha-256. Also a keyed Message Authentication Code (MAC) can be used, such as HMAC, CBC-MAC. The key necessary for a keyed MAC can be stored in a memory, such as the memory (102) or the checksum memory (300) or some other memory. Alternatively the key can be stored using fuses or a physical uncloneable function.

The checksum memory (106) could be comprised in the memory (102). The checksum memory (106) could also be dedicated memory, for example, a register. The checksum memory (106) could be tightly coupled to the security processor (200). Especially when the checksum memory (106) is dedicated, for example, the checksum memory (106) could be comprised in the security processor (200).

The checksum memory (106) could be of read-only type, or write-once type. Typically the checksum memory (106) is a persistent memory, although this is not necessary. For example, the stored checksum (302) could be recomputed and stored in the checksum memory (106) at each power-up of the mobile data handling device (100), or on each boot of the further data handling device (116).

When the software (104) needs to modified, for example, to update or upgrade the software (104), a new checksum must be stored in the checksum memory (300).

Instead of computing the checksum over the full software (104), the checksum can be done over only part of the software (104). This can be advantageous if another part of the software (104) is changed often, or is outside the control of the security processor (200), or is individualized. Also parts outside the software (104) could be included in the computation of the checksum, such as a user profile, security settings, or any other data that needs to be protected from unauthorized modification. Computing the checksum over only part of the software (104) has the advantage that it is faster than computing the checksum over the entire software (104). As another example, the checksum could be computed over only those parts of the software (104) that are security -sensitive, and other parts which are not security sensitive could be ignored.

Verifying the integrity of the software (104), by computing and comparing the checksum, can be done at any opportune moment, such as: during booting, before executing the software (104), before granting the data processor (114) access to read and/or modify and/or write and/or execute part of the software (104), before using the communications module (106), before doing security sensitive operations, before, after or during disconnecting to or from the further data handling device (112), before during or after power-down procedures, at random or fixed intervals, or any other suitable moment.

When the security processor (200) determines that the software (104) was modified without authorization by comparing the computed checksum with the stored checksum (302), the security processor (200) can take appropriate action. For example, the security processor (200) can block reading from and/or writing to and/or executing from all or part of the memory (102). The security processor (200) can terminate further execution of the software (104), or divert execution of the software (104) to an emergency routine. The security processor (200) can also decide to start a download using the communications module (106) of all or part of the software (104) from a trusted source. The security processor (200) can also decide to disconnect from the further data handling device (112), for example, by stopping sending data to, and/or stopping responding to data coming from, the further data handling device (112). The security processor (200) can also signal the user and/or ask for confirmation, for example by displaying a suitable message to which the user can respond, for example, by typing a key, or touching the screen, or by ignoring it and thereby generating a timeout.

Verifying the integrity of the software (104) has the advantage that any, possibly malicious, changes that were made to the software (104) become apparent. This increases the reliability as no software (104) will be run that is damaged. This increases the security as no software (104) will be run that has been changed for malicious purposes. Using a checksum also has the advantage that a RAM can be used, instead of a ROM, in order to ensure that software (104) cannot be changed. As creating a ROM mask for all or part of the memory (102) is expensive, this reduces the cost of the mobile data handling device (100). It also improves the production process as changes to the software (104) can be made late in the production process whereas a ROM cannot be changed after a ROM mask has been created.

Alternatively the checksum memory (300) can be external to the mobile data handling device (100), and read-out using the communications module (106).

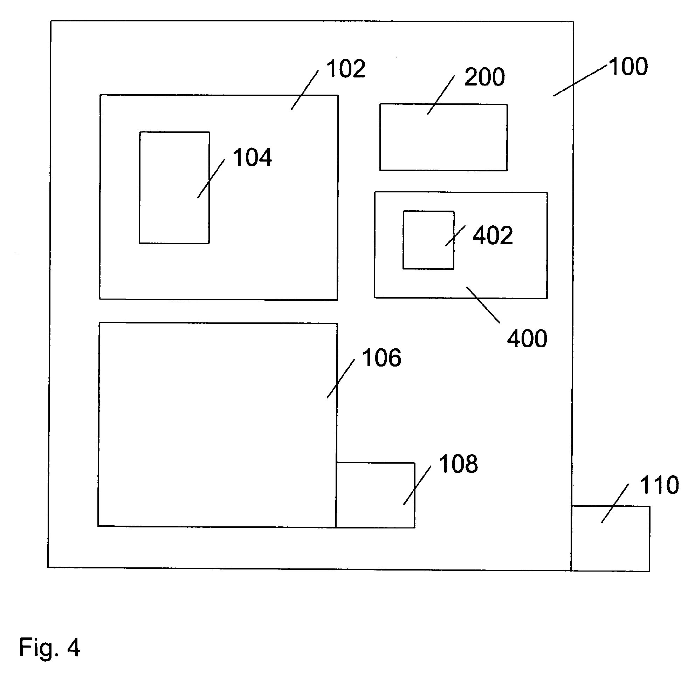

**Figure 4** illustrates a fourth embodiment of the mobile data handling device according to the invention. The mobile data handling device (100) comprises a memory (102) comprising software (104); a communications module (106) comprising a communications interface (108); a connection interface (110); a security processor (200); and a password memory (400) comprising a representation of a first password (402).

A representation of a first password (402) can be an encryption of the password, or a hashing of the password. The representation may include a so-called salt.

Before granting access to the memory (102) the security processor (200) may receive a representation of a second password, in order to prove that the user is an authorized user of the mobile data handling device (100). It may be necessary for the security processor (200) to first process the representation of the second password, so that it is in a representation type compatible to the one of the first password.

The security processor (200) compares the representation of the first password with the representation of the second password, for example, by comparing the two representations bitwise. Alternatively both representations may be input for a comparison function, such as the Guillou-Quisquater algorithm.

In case the security processor (200) determines that the two representations do not match up, the security processor (200) is configured to block access from the data processor (114) to at least part of the memory (102). Blocking access may be done by refusing to decrypt the memory (102), in case the memory was encrypted. The security processor (200) can also cause the communications module (106) to signal this event to a third party by sending an email, SMS, a tcp/ip data packet or any other suitable data signaling.

Verifying the integrity of the software (104) and verifying the second password may be combined by including the second password in the computation of the checksum.

Verifying a password has the advantage that the mobile data handling device (100) can only be used by the lawful owner of the mobile data handling device (100).

The password memory (400) could be comprised in the memory (102), or in the checksum memory (300).

## Claims

1. A mobile data handling device (100) comprising:
a memory (102) comprising a software (104);
a communications module (106) for communication via an external data network;
a control means for:
connecting to a data processor (114) in a further data handling device (112) external to the mobile data handling device (100) via a connection interface (110);
controlling external execution of the software (104) by the data processor (114); and
controlling the communications module (106) to at least receive and/or send data via the external data network under the control of the software (104).

2. A mobile data handling device (100) as in claim 1 comprising a security processor (200) configured for controlling access to the software (104).

3. A mobile data handling device (100) as in claim 2 wherein
the communications module (106) is arranged to receive an update to the software (104) via the external data network; and
the security processor is configured to modify the software (104) in accordance with the update to the software (104).

4. A mobile data handling device (100) as in any one of claim 2 or claim 3 comprising
a checksum memory (300) comprising a stored checksum (302);
wherein the security processor is configured:
to process, at least, part of the software (104), in accordance with a checksum function to derive a computed checksum;
to compare the computed checksum with the stored checksum (302); and
to signal that the software (104) was modified if the result of the comparison is unequal.

5. A mobile data handling device (100) as in any one of claim 2 to 4 comprising
a password memory (400) comprising a representation of a first password (402)
wherein the security processor is configured:
to receive a representation of a second password;
to compare the representation of the first password with the representation of the second password; and
to block access from the data processor to at least part of the memory (102) if the result of the comparison is unequal.

6. A mobile data handling device (100) as in any one of the preceding claims, configured for booting the data processor in the further data handling device (112).

7. A mobile data handling device (100) as in claim 6 wherein
the further data handling device (112) comprises a further communications module; and
the software (104) comprises bootable operating system software; and
the operating system software is arranged to disable access from the data processor to the further communications module.

8. A mobile data handling device (100) as in any one of the preceding claims wherein the connection interface (110) comprises a USB interface.

9. A mobile data handling device (100) as in any one of claim 1 to 7 wherein the connection interface (110) comprises a wireless interface.

10. A mobile data handling device (100) as claimed in any one of claims 2 to 9, wherein the security processor is configured to present the memory (102) as an emulated drive to the further data handling device (112).

11. A mobile data handling device (100) as in any one of the preceding claims wherein the communications module (106) is arranged to communicate wirelessly.

12. A mobile data handling device (100) as in any one of the preceding claims wherein the communications module (106) is arranged to filter out malformed data packets from an incoming stream of data packets.

13. A computer program product comprising computer code for implementing the control means in the mobile data handling device (100) as claimed in any one of claim 1 to 12.

14. A method for providing software via a data network to configure a mobile data handling device (100) to be operative as defined in any one of claim 1 to 12.

15. A mobile phone comprising the mobile data handling device as claimed in any one of claim 1 to 12.
